# EUROPEAN PATENT APPLICATION

(11) **EP 3 693 544 A1**
(43) Date of publication of application: **12.08.2020**
(21) Application number: 20155731.1
(22) Date of filing: 05.02.2020
(51) Int. Cl.: F01D 5/08, F01D 9/02, F01D 25/24

(54) **GAS TURBINE TANGENTIAL ON BOARD INJECTOR WITH A FULL SWEEPING NOZZLE**

(30) Priority: 05.02.2019 US 201916267955
(71) Applicant: United Technologies Corporation, Farmington, CT 06032 (US)
(72) Inventor: REISCH, Angela C., Portland, ME 04102 (US); THILL, Carson A. Roy, South Berwick, ME 03908 (US); MCDOWELL, Dairus Deylan, Springvale, ME 04083 (US); HU, Jin, Glastonbury, CT 06033 (US); DRAKE, Jeremy, South Berwick, ME 03908 (US); O'CONNER, Gregory A., Westbrook, ME 04092 (US); PONS, David M., Palm Beach Gardens, FL 33418 (US); KWOKA, Katelyn, Portsmouth, NH 03801 (US)
(74) Representative: Dehns

(57) **Abstract**

An on-board injector (78) for delivering discharge air (D) toward a turbine rotor (74) of a gas turbine engine (20). The on-board injector (78) having: a first wall (88); a second wall (90) spaced from said first wall (88) to define an annular inlet (92) and an annular exit (96), wherein the first wall (88) has a first length and the second wall (90) has a second length; and a plurality of airfoils (94) extending between the first wall (88) and the second wall (90) to segregate discharge air (D) from the annular inlet (92), wherein each of the plurality of airfoils (94) extend from the annular inlet (92) and the annular exit (96) and completely across the first length and the second length.

## Description

### BACKGROUND

The present disclosure relates to gas turbine engines, and, more specifically, to efficient air mixing system(s) including passages and/or mixing chambers and volumes distributed about a combustor section of the gas turbine engine.

Gas turbine engines often operate at high temperatures. Combustors and turbines in particular may be exposed to exceedingly harsh environments. As engine efficiency and power increases, internal temperatures continue to rise. As a result, gas turbine engines depend on cooling to protect components and ensure longevity. Cooling, however, often relies on gas extracted from the gas path that would otherwise translate to thrust. Thus, providing cooling while minimizing the use of compressed gas may increase engine efficiency. In addition, structural needs of the engine components also need to be met when providing cooling paths for various components of the gas turbine engine. Therefore, it is desirable to provide improved cooling paths through the gas turbine engine.

### BRIEF DESCRIPTION

Disclosed is an on-board injector for delivering discharge air toward a turbine rotor of a gas turbine engine. The on-board injector having: a first wall; a second wall spaced from said first wall to define an annular inlet and an annular exit, wherein the first wall has a first length and the second wall has a second length; and a plurality of airfoils extending between the first wall and the second wall to segregate discharge air from the annular inlet, wherein each of the plurality of airfoils extend from the annular inlet and the annular exit and completely across the first length and the second length.

In addition to one or more of the features described above, or as an alternative to any of the foregoing embodiments, the plurality of airfoils each have a variable fillet extending between the airfoil and the first wall.

In addition to one or more of the features described above, or as an alternative to any of the foregoing embodiments, the plurality of airfoils each have a variable fillet extending between the airfoil and the second wall.

In addition to one or more of the features described above, or as an alternative to any of the foregoing embodiments, the fillet radius at the annular inlet is greater than the fillet radius at the annular exit.

In addition to one or more of the features described above, or as an alternative to any of the foregoing embodiments, the on-board injector is a tangential on-board injector.

Also disclosed is a gas turbine engine. The gas turbine engine having: a combustor; a turbine located downstream of the combustor; and an on-board injector that delivers discharge air toward the turbine, comprising: a first wall; a second wall spaced from said first wall to define an annular inlet and an annular exit about an engine axis, wherein the first wall has a first length and the second wall has a second length; and a plurality of airfoils extending between the first wall and the second wall to segregate discharge air from the annular inlet, wherein each of the plurality of airfoils extend from the annular inlet and the annular exit and completely across the first length and the second length.

In addition to one or more of the features described above, or as an alternative to any of the foregoing embodiments, the on-board injector supports the combustor and a first vane of the turbine via a support member.

In addition to one or more of the features described above, or as an alternative to any of the foregoing embodiments, the support member extends from the annular inlet of the on-board injector.

In addition to one or more of the features described above, or as an alternative to any of the foregoing embodiments, the support member extends from the first wall of the on-board injector.

In addition to one or more of the features described above, or as an alternative to any of the foregoing embodiments, the plurality of airfoils each have a variable fillet extending between the airfoil and the first wall.

In addition to one or more of the features described above, or as an alternative to any of the foregoing embodiments, the plurality of airfoils each have a variable fillet extending between the airfoil and the second wall.

In addition to one or more of the features described above, or as an alternative to any of the foregoing embodiments, the fillet radius at the annular inlet is greater than the fillet radius at the annular exit.

In addition to one or more of the features described above, or as an alternative to any of the foregoing embodiments, the on-board injector directs cooling air to a rotor hub of the turbine.

In addition to one or more of the features described above, or as an alternative to any of the foregoing embodiments, the on-board injector is a tangential on-board injector.

Also disclosed is a method of forming an on-board injector of a gas turbine engine. The method including the steps of: securing a first wall to a second wall via a plurality of airfoils extending between the first wall and the second wall, wherein the first wall is spaced from the second wall to define an annular inlet and an annular exit, wherein the first wall has a first length and the second wall has a second length, and wherein each of the plurality of airfoils extend from the annular inlet and the annular exit and completely across the first length and the second length.

In addition to one or more of the features described above, or as an alternative to any of the foregoing embodiments, the on-board injector is formed from a casting process.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 is a cross sectional view of a portion of the gas turbine engine;
FIG. 3 is a partial view of a tangential on-board injector (TOBI) in accordance with the present disclosure;
FIG. 4 is view of a portion of the tangential on-board injector (TOBI) as viewed along lines 4-4 of FIG. 3; and
FIG. 5 is an enlarged view of a portion of FIG. 4.

### DETAILED DESCRIPTION

A detailed description of one or more embodiments of the disclosed apparatus and method are presented herein by way of exemplification and not limitation with reference to the Figures.

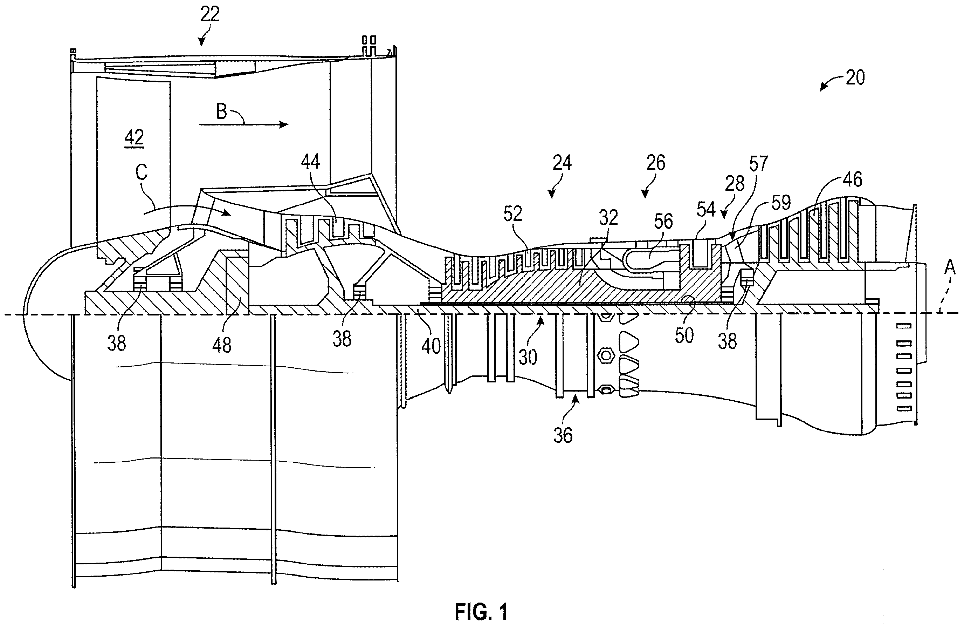

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five (5). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

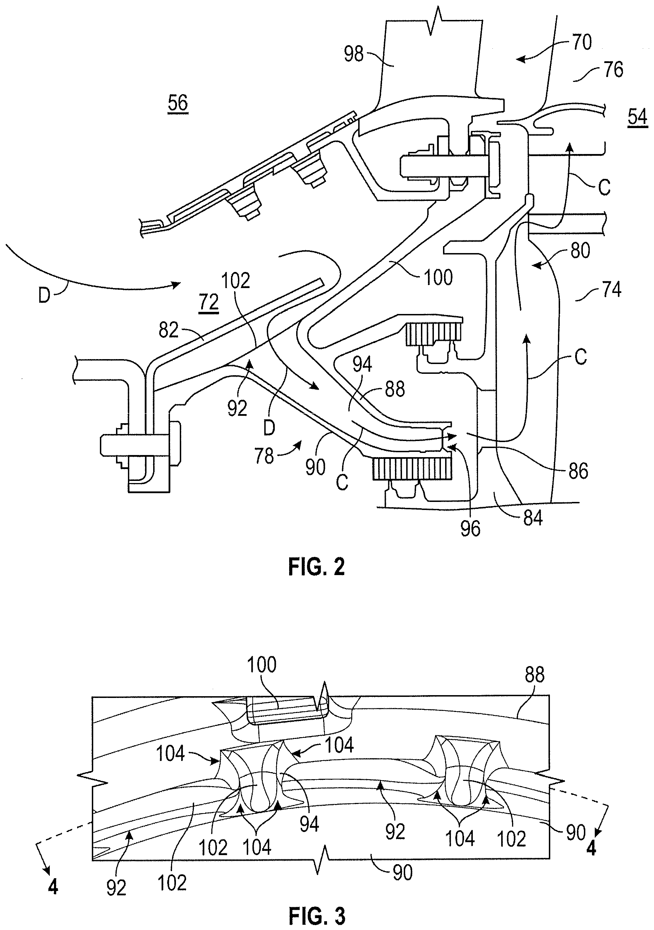

The high pressure compressor 52 and the high pressure turbine 54 are mounted on a rotor shaft to form high speed spool 32 that rotates about the engine longitudinal axis A. Discharge air D from the compressor 52 is provided to a turbine inlet 70 via passages 72 which are disposed about combustor 56 which is only partially shown in FIG. 2. A turbine rotor hub 74 (partially shown) supports turbine rotor blades 76 (also partially shown). The blades 76 receive and expand the discharge air D from the turbine inlet 70.

An on-board injector 78 which, in this disclosed non-limiting embodiment, is a tangential on-board injector (TOBI) delivers discharge air D to a space 80 near the turbine 54 for cooling the turbine rotor hub 74. A baffle 82 may be arranged between the passage 72 and the on-board injector 78 to turn the air abruptly to separate debris before communication to the turbine 54.

A coverplate 84 separates the on-board injector 78 and the turbine rotor hub 74. A multiple of coverplate apertures 86 are provided in the coverplate 84 to direct cooling air C from the on-board injector 78 to be directed into the turbine rotor hub 74.

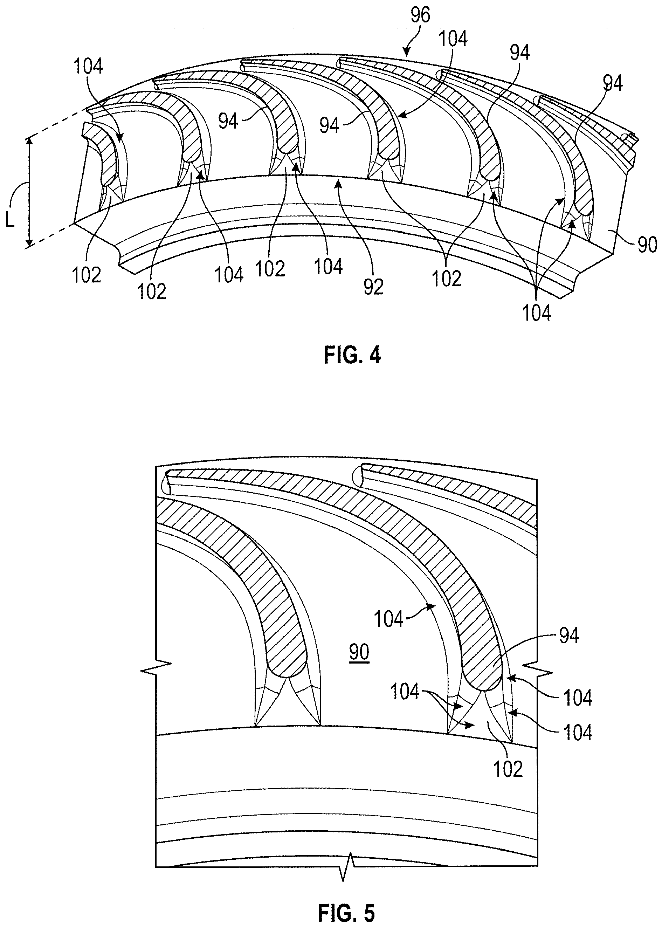

With reference to at least FIGS. 2-5, the on-board injector 78 generally includes a first wall 88 and a second wall 90 spaced from the first wall to define an annular inlet 92 about the engine longitudinal axis A. A plurality of airfoils 94 are located between the first wall 88 and the second wall 90 and extend from the annular inlet or nozzle inlet 92 of the on-board injector 78 to an annular exit or nozzle exit 96 of the injector 78. The plurality of airfoils 94 segregate discharge air from the annular inlet 92 (also shown in FIG. 4) and may provide a swirl to the discharge air as it leaves the nozzle exit 96. In one embodiment, each of the airfoils 94 are shaped to have a pressure side and a suction side in order to provide the aforementioned swirl to the discharge air as it leaves the nozzle exit or annular exit 96. The influence upon the discharge air depends on the configuration of the airfoils 94. The first and second walls 88, 90 are annularly disposed about the engine axis A. It should be appreciated that the on-board injector 78 may be manufactured via a casting process or via an additive manufacturing process.

In one non-limiting embodiment, the on-board injector 78 directs cooling air to the first blade 76 of the high pressure turbine 54 as well as supports the position of the combustor 56 and the first vane 98 of the turbine 54 (each being partially shown in at least FIG. 2). This support is provided by a structural member 100 that extends from the first wall 88 and by extending the airfoil 94 across the entire length "L" of the injector 78 support is provided by the airfoils 94. By extending the airfoils 94 across the entire length of the injector 78, a leading edge 102 of the airfoil 94 is disposed at the annular inlet 92, which in turn allows the airfoil 94 to provide the aforementioned support of the combustor 56 and the first vane 98 via structural member 100 and airfoils 94. This negates the need for a separate structural support between the first and second wall 88 and 90 as it has now been incorporated into the airfoil or airfoils 94, which extend across the length L of the injector 78. In one embodiment, the support member 100 extends from the annular inlet 92 of the on-board injector 78. Although illustrated as directing cooling air towards the first blade 76 of the high pressure turbine 54, the on-board injector 78 may be located in other areas of the gas turbine engine where the required cooling and structural support is desired.

As illustrated, the airfoils 94 span the entire length of the tangential on-board injector (TOBI) 78. In addition, the airfoils 94 each have a variable radius fillet 104 extending between the airfoil 94 and the first wall 88 and the second wall 90. The fillet radius is larger at the nozzle entrance 92, to carry more load, and smaller at the nozzle exit 96, to help airflow.

As such, the tangential on-board injector (TOBI) 78 as disclosed herein elongates the airfoil 94 to create a component with the combined functions of support webs and airfoils. This elongated airfoil 94 can better distribute loads applied to the injector 78 when it is secured to the engine 20 and withstand higher stress and more cycles. Also and by combining these features makes for a less complicated casting process as there are half as many features. This also makes inspection of the castings easier because the high stress locations (e.g., leading edge 102 of the airfoil) are easily visible.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the scope thereof. Therefore, it is intended that the present disclosure not be limited to the particular embodiment disclosed as the best mode contemplated for carrying out this present disclosure, but that the present disclosure will include all embodiments falling within the scope of the claims.

The following clauses set out features of the invention which may or may not be presently claimed in this application, but which may form the basis for future amendment or a divisional application.
1. An on-board injector that delivers discharge air toward a turbine rotor of a gas turbine engine, comprising:
   a first wall;
   a second wall spaced from said first wall to define an annular inlet and an annular exit, wherein the first wall has a first length and the second wall has a second length; and
   a plurality of airfoils extending between the first wall and the second wall to segregate discharge air from the annular inlet, wherein each of the plurality of airfoils extend from the annular inlet and the annular exit and completely across the first length and the second length.
2. The on-board injector as recited in clause 1, wherein the plurality of airfoils each have a variable fillet extending between the airfoil and the first wall.
3. The on-board injector as recited in clause 2, wherein the plurality of airfoils each have a variable fillet extending between the airfoil and the second wall.
4. The on-board injector as recited in clause 1, wherein the plurality of airfoils each have a variable fillet extending between the airfoil and the second wall.
5. The on-board injector as recited in clause 2, wherein the fillet radius at the annular inlet is greater than the fillet radius at the annular exit.
6. The on-board injector as recited in clause 3, wherein the fillet radius at the annular inlet is greater than the fillet radius at the annular exit.
7. The on-board injector as recited in clause 6, wherein the on-board injector is a tangential on-board injector.
8. The on-board injector as recited in clause 1, wherein the on-board injector is a tangential on-board injector.
9. A gas turbine engine, comprising:
   a combustor;
   a turbine located downstream of the combustor; and
   an on-board injector that delivers discharge air toward the turbine, comprising: a first wall; a second wall spaced from said first wall to define an annular inlet and an annular exit about an engine axis, wherein the first wall has a first length and the second wall has a second length; and a plurality of airfoils extending between the first wall and the second wall to segregate discharge air from the annular inlet, wherein each of the plurality of airfoils extend from the annular inlet and the annular exit and completely across the first length and the second length.
10. The gas turbine engine as in clause 9, wherein on-board injector supports the combustor and a first vane of the turbine via a support member.
11. The gas turbine engine as in clause 10, wherein the support member extends from the annular inlet of the on-board injector.
12. The gas turbine engine as in clause 10, wherein the support member extends from the first wall of the on-board injector.
13. The gas turbine engine as in clause 9, wherein the plurality of airfoils each have a variable fillet extending between the airfoil and the first wall.
14. The gas turbine engine as in clause 10, wherein the plurality of airfoils each have a variable fillet extending between the airfoil and the second wall.
15. The gas turbine engine as in clause 9, wherein the plurality of airfoils each have a variable fillet extending between the airfoil and the second wall.
16. The gas turbine engine as in clause 13, wherein the fillet radius at the annular inlet is greater than the fillet radius at the annular exit.
17. The gas turbine engine as in clause 9, wherein the on-board injector directs cooling air to a rotor hub of the turbine.
18. The gas turbine engine as in clause 9, wherein the on-board injector is a tangential on-board injector.
19. A method of forming an on-board injector of a gas turbine engine, comprising:
   securing a first wall to a second wall via a plurality of airfoils extending between the first wall and the second wall, wherein the first wall is spaced from the second wall to define an annular inlet and an annular exit, wherein the first wall has a first length and the second wall has a second length, and wherein each of the plurality of airfoils extend from the annular inlet and the annular exit and completely across the first length and the second length.
20. The method as in clause 19, wherein the on-board injector is formed from a casting process.

## Claims

1. An on-board injector (78) that delivers discharge air (D) toward a turbine rotor of a gas turbine engine (20), comprising:
a first wall (88);
a second wall (90) spaced from said first wall (88) to define an annular inlet (92) and an annular exit (96), wherein the first wall (88) has a first length and the second wall (90) has a second length; and
a plurality of airfoils (94) extending between the first wall (88) and the second wall (90) to segregate discharge air (D) from the annular inlet (92), wherein each of the plurality of airfoils (94) extend from the annular inlet (96) and the annular exit and completely across the first length and the second length.

2. The on-board injector (78) as recited in claim 1, wherein the plurality of airfoils (94) each have a variable fillet (104) extending between the airfoil (94) and the first wall (88).

3. The on-board injector (78) as recited in claim 1 or 2, wherein the plurality of airfoils (94) each have a variable fillet (104) extending between the airfoil (94) and the second wall (90).

4. The on-board injector (78) as recited in claim 2 or 3, wherein the fillet radius at the annular inlet (92) is greater than the fillet radius at the annular exit (96).

5. The on-board injector (78) as recited in any preceding claim, wherein the on-board injector (78) is a tangential on-board injector (78).

6. A gas turbine engine (20), comprising:
a combustor (56);
a turbine (54) located downstream of the combustor (56); and
the on-board injector (78) of any preceding claim.

7. The gas turbine engine (20) as in claim 6, wherein on-board injector (78) supports the combustor (56) and a first vane (76) of the turbine (54) via a support member (100).

8. The gas turbine engine (20) as in claim 7, wherein the support member (100) extends from the annular inlet (92) of the on-board injector (78).

9. The gas turbine engine (20) as in claim 7 or 8, wherein the support member (100) extends from the first wall (88) of the on-board injector (78).

10. The gas turbine engine as in any of claims 6 to 9, wherein the on-board injector (78) directs cooling air to a rotor hub (74) of the turbine (54).

11. A method of forming an on-board injector (78) of a gas turbine engine (20), comprising:
securing a first wall (88) to a second wall (90) via a plurality of airfoils (94) extending between the first wall (88) and the second wall (90), wherein the first wall (88) is spaced from the second wall (90) to define an annular inlet (92) and an annular exit (96), wherein the first wall (88) has a first length and the second wall has a second length, and wherein each of the plurality of airfoils (94) extend from the annular inlet (92) and the annular exit (96) and completely across the first length and the second length.

12. The method as in claim 11, wherein the on-board injector (78) is formed from a casting process.
